Europäisches Patentamt

(19) European Patent Office

Office européen des brevets

(11) Numéro de publication: **0 132 186**
**B1**

(12) **FASCICULE DE BREVET EUROPEEN**

(45) Date de publication du fascicule du brevet: **18.05.88**

(21) Numéro de dépôt: **84401400.1**

(22) Date de dépôt: **03.07.84**

(51) Int. Cl.⁴: **G 11 B 5/127,** G 11 B 5/29, G 11 B 5/31 // G11B5/245

(54) **Transducteur magnétique hautement intégré d'écriture d'informations sur un support magnétique.**

(30) Priorité: **13.07.83 FR 8311728**

(43) Date de publication de la demande:
**23.01.85 Bulletin 85/04**

(45) Mention de la délivrance du brevet:
**18.05.88 Bulletin 88/20**

(84) Etats contractants désignés:
**DE FR GB IT NL**

(56) Documents cités:
**WO-A-82/03938**
**DE-A-3 213 928**
**DE-B-1 159 017**
**FR-A-1 604 401**
**NL-A-8 302 585**
**US-A-3 271 751**
**US-A-3 495 230**
**US-A-3 633 188**
**US-A-3 810 191**
**US-A-4 222 084**

**IBM TECHNICAL DISCLOSURE BULLETIN, vol. 21, no. 2, July 1978, pages 667-668, Armonk, N.Y., US; A. BRUNSCH et al.: "Magnetic read/write thin film head with variable, adjustable anisotropy"**

(73) Titulaire: **BULL S.A.**
**121, Avenue de Malakoff**
**F-75116 Paris (FR)**

(72) Inventeur: **Desserre, Jacques**
**12 bis rue de la Mairie Orcemont**
**F-78120 Rambouillet (FR)**

(74) Mandataire: **Gouesmel, Daniel et al**
**BULL S.A. Industrial Property Department 25 avenue de la Grande-Armée GA-4X018**
**F-75016 Paris (FR)**

(56) References cited:
**IBM TECHNICAL DISCLOSURE BULLETIN, vol. 3, no. 11, April 1961, page 18, Armonk, N.Y., US; J. FLORA et al.: "Multitrack probe type recording transducer"**

Courier Press, Leamington Spa, England.

## Description

La présente invention concerne un transducteur magnétique hautement intégré d'écriture d'informations sur un support magnétique. Elle est notamment applicable à l'écriture à haute densité linéique et radiale d'informations sur disques magnétiques de mémoires à disques, plus particulièrement ceux des mémoires magnèto-optiques utilisées dans les systèmes de traitement de l'information.

On sait que dans les mémoires à disques magnétiques, les informations portées par les disques magnétiques sont contenues à l'intérieur de pistes d'enregistrement concentriques cirulaires couvrant généralement la majeure partie de leures deux faces.

Généralement, une suite d'informations magnétiques écrites sur une piste d'un disque se présente sous la forme d'une succession de petits domaines -magnétiques appelés ''domaines élémentaires'' répartis sur toute la longueur de la piste et ayant des inductions magnétiques de même module et de méme sens opposé.

On appelle densité linéique d'informations le nombre de changements de sens de magnétisation par unité de longueur mesurée suivant la circonférence d'une piste alors qu'on appelle densité radiale le nombre de pistes par unité de longueur mesurée suivant le diamètre du disque.

On appelle pour simplifier ''transducteur'' les moyens qui permettent soit d'écrire (on dit également enregistrer) les informations sur les disques magnétiques, soit de les lire, soit enfin de réaliser l'une et l'autre de ces deux fonctions. A une face d'un disque donnée, on associe généralement un ou plusieurs transducteurs, le disque défilant devant celui-ci ou ceux-ci.

L'une des tendances actuelles du développement des mémoires à disques magnétiques est de s'orienter vers l'étude des mémoires magnéto-optiques où les informations sont écrites sur des disques magnétiques, par des moyens qui, le plus souvent sont soit magnétiques soit thermo-magnétiques. La lecture est effectuée par un ensemble de dispositifs opto-électroniques permettant d'observer à un moment donné, en un endroit donné, une face d'un disque au moyen d'un faisceau de lumière polarisée et de délivrer un signal électrique dont la tension ou courant est fonction de la valeur des informations situées à cet endroit.

Dans ces mémoires, on cherche à obtenir des densités radiale et linéique égales ou supérieures, respectivement à 5000 pistes par centimètre et 10000 changements de sens de magnétisation par centimètre.

Le mode d'écriture d'informations choisi alors pour les disques magnétiques des mémoires magnéto-optiques est un mode d'écriture dit ''perpendiculaire''. Il est tel que l'aimantation dans les domaines élémentaires est perpendiculaire à la couche magnétique d'enregistrement du disque. On montre en effet, que ce type d'aimantation permet d'obtenir de plus grandes densités linéique et radiale d'informations et que son mode d'observation par un faisceau de lumière est plus facile que le mode d'observation d'un milieu où l'aimantation est longitudinale, c'est-à-dire parallèle à la couche et à la piste. Dans le mode perpendiculaire, le milieu magnétique constituant la couche est un milieu magnétique anisotrope, c'est-à-dire un milieu présentant au moins une direction privilégiée de magnétisation (ou d'aimantation) appelée également ''direction de facile aimantation''.

Dans les mémoires magnéto-optiques, l'un des modes d'écriture des informations consiste à utiliser des transducteurs magnétiques généralement composés d'un circuit magnétique couplé à un enroulement et qui comporte un entrefer. La variation de l'induction à l'intérieur de l'entrefer permet l'écriture des informations contenues sur le support associé à ce transducteur.

De préférence, pour obtenir de trés hautes densités linéique et radiale d'informations, on utilise des transducteurs magnétiques intégrés du type de celui dont on trouve la description dans le brevet français No. 2.428.886 déposé le 13 Juin 1978 sous le titre ''Support d'informations magnétiques à enregistrement perpendiculaire'' par la Compagnie Internationale pour l'Informatique CII Honeywell Bull dont l'inventeur est M. Jean-Pierre Lazzari.

Le transducteur magnétique intégré comprend deux pièces polaires réalisées en couches magnétiques minces et disposées d'un même côté du support d'informations en présentant au voisinage de celui-ci un entrefer. Les pièces polaires enserrent un bobinage électrique formé de couches minces conductrices superposées et séparées les unes des autres par des couches minces isolantes. Le transducteur défile devant le support perpendiculairement au plan des deux couches minces magnétiques constituant les pièces polaires. Lors de ce défilement tout domaine magnétique d'une piste du support en regard duquel le transducteur est disposé, passe successivement dans le temps en regard de la première pièce polaire appelée ''pièce polaire amont'' et de la seconde appelée ''pièce polaire aval''. De préférence, si l'on appelle ''épaisseur des pièces polaires'' la dimension de celles-ci mesurée parallèlement au sens de défilement, l'épaisseur de la pièce polaire amont est sensiblement supérieure à l'épaisseur de la pièce polaire aval (généralement plus de 5 fois supérieure).

L'écriture des informations sur le support est effectuée en faisant défiler celui-ci à une vitesse donnée constante et en faisant traverser le bobinage par une courant variable représentatif des informations à écrire. Ce courant qui traverse l'ensemble des couches conductrices du bobinage provoque la génération d'un flux magnétique dans les pièces polaires qui se ferme à travers la couche magnétique du support d'informations. En regard de la pièce polaire aval, le flux magnétique est concentré à cause de la faible épaisseur de celle-ci. Comme l'axe de facile aimantation de la couche magnétique est perpendiculaire à la surface de la couche magnétique d'enregistrement, la composante du champ magnétique perpendiculaire à cette surface a une intensité suffisante qui peut provoquer le renversement de l'aimantation dans cette direction. En regard de la pièce polaire amont, au contraire, le champ magnétique se disperse et sa composante perpendiculaire à la surface de la couche a une intensité beaucoup moins forte que la même composante en regard de la pièce polaire aval. Ceci permet de ne pas modifier l'état magnétique de la couche au niveau de la pièce polaire amont et permet à la pièce polaire aval d'écrire les informations dans les meilleures conditions.

De préférence, les pièces polaires sont réalisées en un matériau magnétique anisotrope, l'axe de facile aimantation étant perpendiculaire au sens de défilement des informations et parallèle à la surface du support et l'axe de difficile aimantation étant perpendiculaire au support d'informations. Les avantages de l'utilisation de pièces polaires anisotropes sont particulièrement mis en évidence dans le brevet français No. 2.063.693 déposé le 28 Octobre 1969 par la Compagnie Internationale pour l'Informatique et le Commissariat à l'Energie Atomique sous le titre "Tête magnétique intégrée et procédé de fabrication de ladite tête" dont l'inventeur est Jean Pierre Lazzari.

En vue d'obtenir des densités radiale et linéique de l'ordre de celles indiquées plus haut, on montre qu'il est nécessaire que les dimensions de la pièce polaire aval soient telles qu'au niveau du plan de l'entrefer, la section de cette pièce polaire ait une longueur et une largeur allant de quelques dixièmes à un micron. Dans ce cas, on donne à cette même pièce polaire aval une forme telle qu'elle présente un rétrécissement au niveau de l'entrefer, par exemple de la manière indiquée dans le brevet No. 2.297.475 déposé le 10 Janvier 1975 par la Compagnie Internationale pour l'Informatique sous le titre "Perfectionnements apportés aux structures de têtes magnétiques du type intégré". La pièce polaire peut également avoir la forme trapèzoïdale. En d'autres termes, cela signifie qu'au niveau de l'entrefer, la section de la pièce polaire aval est beaucoup plus faible que dans les parties de cette pièce polaire les plus éloignées du support d'enregistrement. Pour réduire les dimensions du transducteur intégré, on peut envisager de n'utiliser qu'un nombre limité de conducteurs, voire même un seul conducteur, et ce surtout dans le cas de l'écriture d'informations.

La tendance actuelle du développement des mémoires magnéto-optiques est de chercher à écrire simultanément plusieurs pistes (8 pistes par exemple), les octets d'informations étant répartis par exemple sur huit pistes adjacentes, afin d'accroître les débits d'écriture et de ce fait, diminuer le temps d'écriture d'une même face de disque. En conséquence, il est nécessaire de réaliser un ensemble de transducteurs magnétiques de très faible dimension, dits à très haute intégration, cet ensemble étant désigné sous le terme de "têtes multi-transducteurs".

Les têtes multi-transducteurs sont connues on en trouve décrites dans le brevet français No. 2.384.315 déposé le 18 Mars 1977 par la Compagnie Internationale pour l'Informatique CII Honeywell Bull, sous le titre "Plate-forme comportant au moins un transducteur intégré et procédé de fabrication de la dite plate-forme". Cette tête comprend un ensemble de transducteurs identiques à ceux décrits dans les brevets 2.297.475 et 2.428.886 précités, disposés côte-à-côte de manière à pouvoir écrire (ou lire) des informations sur plusieurs pistes, simultanément.

On connait également d'autres têtes multi-transducteurs.

L'une de celle-ci est par exemple décrite dans l'article IEEE Transmag Volume MAG 18, No. 6, Novembre 1982 page 1140, de Wakapayashi, Abe, Miyairi. Chacun des transducteurs de la têtes multi-transducteurs mentionné ci-dessus, comprend un premier conducteur dit "de pré-polarisation" ce conducteur étant commun à l'ensemble des transducteurs, et un second conducteur en forme de boucle propre à chaque transducteur qui est parallèle au premier conducteur, ce second conducteur est un conducteur de sélection permettant de commander l'écriture de transducteur choisi pour écrire une information donnée à un instant donné sur une piste du support d'enregistrement.

Le premier conducteur de pré-polarisation donne à chacune des pièces polaires de chacun des transducteurs un état magnétique dit de pré-polarisation tel que le champ magnétique créé au voisinage immédiat de l'entrefer est insuffisant pour écrire une information sur la partie du support qui se trouve en regard de cet entrefer à cet instant, mais suffisant pour limiter l'énergie à fournir au conducteur de sélection lors de l'écriture.

Pour écrire une information sur le support au moyen d'un conducteur donné, on envoie dans le second conducteur de ce transducteur, une impulsion de courant qui va créer dans les pièces polaires de ce transducteur une polarisation supplémentaire, appelée sur-polarisation, qui s'ajoutant à la pré-polarisation dûe au passage du courant dans le premier conducteur, va permettre au transducteur de créer au voisinage de son entrefer, un champ magnétique d'intensité suffisante pour écrire une information sur la partie du support qui se trouve en regard de cet etrefer. L'avantage d'une telle solution est de diminuer l'intensité du courant d'écriture dans le bobinage, et particulèrement dans le premier conducteur, ce qui permet de diminuer l'échauffement des têtes et de réduire le nombre de tours de chaque bobinage, ce qui est un avantage par rapport aux têtes multi-transducteurs mentionnés plus haut et décrites dans le brevet 2.384.315 précité. Par contre, ces têtes présentent l'inconvénient d'avoir des transducteurs dont les dimensions sont telles (en raison essentiellement des boucles formant les seconds conducteurs) que les pas entre les différents transducteurs (dimensions entre les axes de symétrie des entrefers normaux au support, et parallèles au sens de défilement de ce dernier) sont supérieurs aux pas des pistes que l'on cherche à écrire (celui-ci étant en gros égal à la distance des axes de symétrie des pistes), ce qui rend plus compliqué et plus long l'écriture de l'ensemble des informations d'un disque.

En outre, la forme et la dimension des bobinages est telle que les risques d'interaction entre les champs magnétiques créés par des bobinages de transducteurs voisins, n'est pas négligeable: des phénomènes de diaphonie risquent donc de surgir entre transducteurs voisins.

On connaît également des têtes multitransducteurs qui sont telles que les pas entre les différents transducteurs la composant sont égaux aux pas des pistes que l'on cherche à écrire. Une telle tête et les transducteurs la composant sont décrits dans la demande de brevet PCT dont le numéro est W082/03938 déposée le 6 Mai 1982 sous priorité des Etats-Unis d'Amérique du 6 mai 1981 et dont le déposant est la Société CENSTOR Corporation.

La demande de brevet international PCT de la Société CENSTOR montre un transducteur hautement intégré d'écriture d'informations sur un support magnétique défilant devant lui, et qui comporte:

—un circuit magnétique ayant une pièce polaire d'écriture,

—des premiers moyens de commande de l'écriture agissant sur la pièce polaire d'écriture de telle sorte que celle-ci produise au voisinage immédiat un support un champ magnétique d'intensité suffisante pour écrire les informations sur ce dernier,

—des seconds moyens de commande agissant sur la pièce polaire d'écriture en cas de non-écriture, par amoindrissement de l'action des premiers moyens de commande, de manière à ce que le champ magnétique produit par la pièce polaire d'écriture ait alors une intensité suffisante pour écrire des informations sur le support.

Le circuit magnétique comprend également une pièce polaire de fermeture du flux, la pièce polaire d'écriture et la pièce polaire de fermeture de flux présentant au voisinage du support d'enregistrement un entrefer, au moins la pièce polaire aval (pièce polaire d'écriture) étant réalisée en couches minces et magnétiquement anisotrope avec ses directions de difficile et facile aimantation respectivement normales et parallèles au support. Les premiers moyens de commande sont constitués par des moyens pour engendrer un champ magnétique selon la direction de difficile aimantation de la pièce polaire aval, alors que les seconds moyens de commande sont constitués par des moyens pour engendrer un champ magnétique selon la direction de facile aimantation de la pièce polaire aval.

Les seconds moyens sont constitués par un conducteur disposé perpendiculairement à la direction de difficile aimantation, noyé à l'intérieur de la pièce polaire d'écriture.

Les densités radiales des pistes écrites par la tête multitransducteurs décrite dans la demande de brevet CENSTOR sont de l'ordre de 1.000 pistes par centimètre, la largeur des pôles d'écriture étant de l'ordre de 10 micromètres. Par ailleurs, le procédé de fabrication de chacun des transducteurs de la tête multitransducteurs ainsi décrite est relativement compliqué puisque les conducteurs constituant les seconds moyens de commande sont noyés à l'intérieur de la pièce polaire d'écriture. Enfin, la forme des pôles d'écriture est rectangulaire ce qui ne donne pas une efficacité mangétique maximum au pôle d'écriture.

La tête multransducteurs selon l'invention permet de remédier aux inconvénients précédents en obtenant à l'écriture des densités radiales d'enregistrement considérablement supérieures à celles obtenues par la tête multitransducteurs de CENSTOR, avec des pôles d'écriture dont la largeur est de l'ordre du micromètre, ce qui autorise une densité d'écriture des pistes environ 10 fois supérieure aux têtes multitransducteurs selon l'art antérieur. Par ailleurs, étant donné la forme trapézoïdale des pôles d'écriture des transducteurs utilisés dans la tête multitransducteurs selon l'invention, on obtient une excellente efficacité magnétique à l'écriture. De plus, le procédé de fabrication de la tête multitransducteurs selon l'invention est plus simple que les procédés de fabrication des transducteurs et des têtes multitransducteurs selon l'art antérieur.

Selon l'invention, la tête hautement intégrée d'écriture d'informations sur un support magnétique défilant devant elle, qui comporte:

—une pluralité de transducteurs dont chacun comprend une première pièce polaire et une seconde pièce polaire en couches minces disposées d'un même côté du support, le seconde pièce polaire étant magnétiquement ainsotrope avec ses directions de difficile et facile aimantation respectivement normales et parallèles au support,

—des premiers moyens de commande. commus à tous les transducteurs pour engendrer un champ magnétique selon la direction de difficile aimantation de la pièce polaire aval.

—des seconds moyens de commande propres à chaque seconde pièce polaire pour engendrer un champ magnétique selon la direction de facile aimantation de la pièce polaire aval,

est caractérisée en ce que, les premiers et seconds moyens de commande étant disposés perpendiculairement l'un à l'autre de part et d'autre de la seconde piéce polaire, elle comprend un premier ensemble de secondes pièces polaires et un second ensemble de secondes pièces polaires distincts dont l'un est disposé dans sa plus grande partie au-dessus et parallèlement à l'autre, à l'exception des extrémités de chacune des secondes pièces polaires les plus proches du support d'enregistrement, lesquelles sont coplanaires et équidistantes entre-elles, leur pas étant égal à celui d'une piste du support.

Selon une particularité de têtes multitransducteurs selon l'invention, le conducteur commun présente une pluralité d'épaulements en nombre égal au nombre de pôles du second ensemble, les secondes pièces polaires du second ensemble présentant au niveau du conducteur commun des épaulements plus importants que les secondes pièces polaires du premier ensemble, en raison de la présence des épaulements du conducteur commun.

Les caractéristiques et avantages de l'invention ressortiront plus clairement de la description qui suit, fait en référence aux dessins annexés.

Sur ces dessins:

—La figure 1: montre un transducteur magnétique intégré d'écriture d'informations selon l'art antérieur, tel que décrit dans le brevet No. 2.428.886 précité,

—La figure 1a: étant une vue de trois-quarts en perspective,

—La figure 1b: étant une vue de côté en coupe, prise dan sun plan normal au support d'enregistrement magnétique parallèle au sens de défilement de celui-ci,

—La figure 2: est une variante du transducteur de la figure 1, réalisée selon les principes décrits dans le brevet 2.297.475 précité,

—La figure 3: est une vue partielle illustrant le principe de réalisation et de fonctionnement d'une tête multi-transducteurs selon l'art antérieur, telle que décrite dans le document IEEE TRANSMAG précité,

—La figure 4: montre un exemple de réalisation du transducteur magnétique hautement intégré utilisé, dans la tête multi-tranducteurs selon l'invention

—La figure 4a: étant une vue de trois-quarts en perspective montrant le transducteur disposé en regard d'une piste d'enregistrement du support magnétique,

—La figure 4b: étant une vue en coupe prise dans un plan normal au support d'informations et parallèle à la direction de défilement des informations,

—La figure 4c: montrant l'angle qui fait le vecteur aimantation dans la pièce polaire aval avec la dirction de facile aimantation en plusieurs points de cette pièce;

—La figure 5 composée des figures 5a, 5b, 5c, la figure 6 composée des figures 6a, 6b et 6c, les figures 7 et 8 illustrent différentes étapes du fonctionnement du transducteur montrée à la figure 4,

—Les figures 5a, 5b et 5c illustrent en fonction des courants circulant dans le premier et le second conducteurs, la direction du vecteur aimantation à l'intérieur de la pièce polaire aval du transducteur de la figure 4,

—Les figures 6a, 6b et 6c: montrant comment sont écrites les informations sur le support d'enregistrement magnétique en fonction de la direction qu'occupe le vecteur aimantation dans la pièce polaire aval comme indiqué aux figures 5a, 5b et 5c,

—La figure 7: montrant comment on détermine la direction du vecteur aimantation à l'intérieur de la pièce polaire aval, à partir de la courbe magnétique caractéristique du milieu magnétique constituant cette pièce polaire, courbe caractéristique appelée "astroïde",

—La figure 8, montrant la courbe caractéristique magnétique dite "astroïde" du support d'enregistrement magnétique, permettant de comprendre comment sont enregistrées les informations sur ce support,

—La figure 9: est un chronogramme partiel de courant circulant dans le second conducteur du transducteur de la figure 4,

—La figure 10: montre coment évolue le champ magnétique créé par le transducteur de la figure 4 au voisinage immédiat de l'entrefer en fonction du temps, et par suite en fonction du courant qui circule dans le second conducteur, courant dont la courbe est montrée à la figure 9,

—La figure 11, montre une tête multi-transducteurs selon l'invention,

—La figure 11a: est une vue de trois-quarts en perspective montrant comment est disposée la tête par rapport à un support d'enregistrement tel qu'un disque magnétique qui défile devant elle,

—La figure 11b: est une vue en coupe de cette tête, le plan de coupe étant un plan normal à celle-ci et parallèle au support d'enregistrement et passant par le premier conducteur, et montrant un tranducteur d'ordre pair,

—La figure 11c: est une vue en coupe de la tête selon l'invention prise dans un plan de coupe perpendiculaire à la tête et parallèle au support d'enregistrement, passant par le premier conducteur et montrant un transducteur d'ordre impair,

—La figure 11d: étant une vue de dessous prise depuis le support d'enregistrement magnétique,

—La figure 12: montre vus en perspective, les différents éléments constitutifs essentiels de la tête multi-transducteurs selon l'invention montrée à la figure 11,

—La figure 13: est un schéma de principe montrant le circuit électrique de commande des différents transducteurs constituant la tête multi-transducteurs présentée à la figure 11.

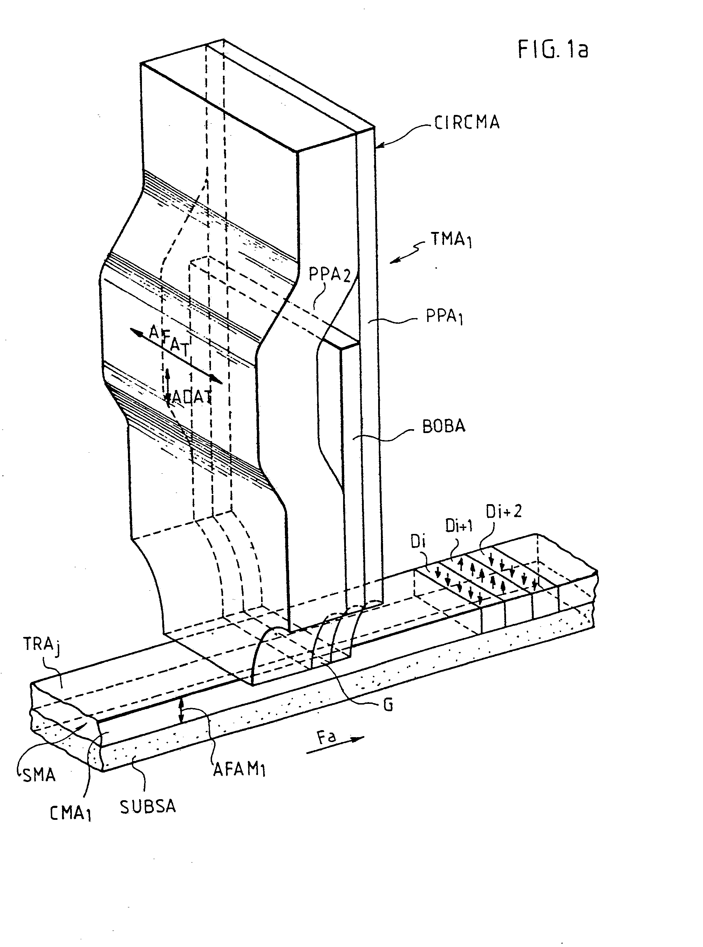

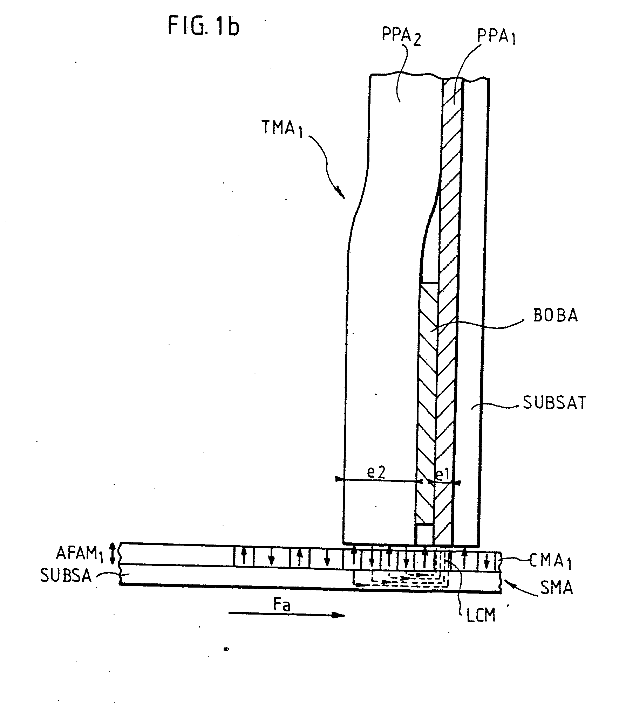

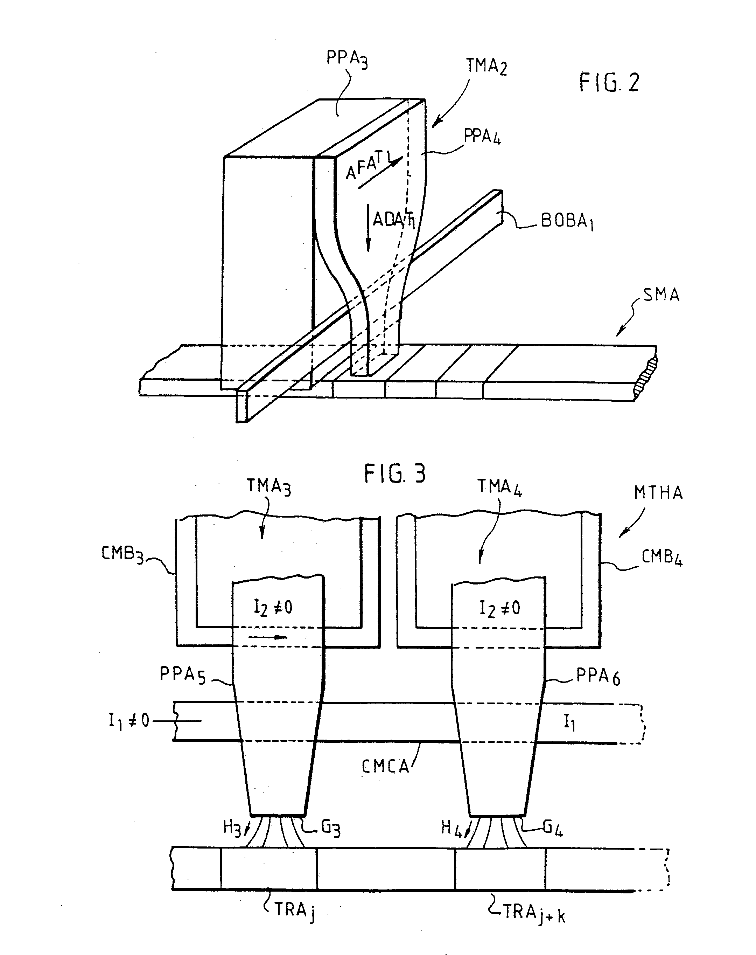

Afin de mieux comprendre comment est constituée et comment fonctionne la tête multi-transducteurs selon l'invention, il est utile de faire quelques rappels sur les principes de constitution et de fonctionnement des transducteurs magnétiques d'écriture intégrés selon l'art antérieur, ainsi que sur les têtes multi-transducteurs selon l'art antérieur. Ces rappels sont illustrés par les figures 1a, 1b, 2 montrant un transducteur magnétique d'écriture selon l'art antérieur et par la figure 3 montrant une tête multi-transducteurs selon l'art antérieur.

On considère les figures 1a et 1b qui montrent un transducteur magnétique d'écriture intégré tel que décrit dans le brevet 2.428.886 précité.

Ce transducteur désigné par TMA1 comprend:
— une première pièce polaire PPA1,
— une seconde pièce polaire PPA2,
— un bobinage BOBA.

Les deux pièces polaires PPA1 et PPA2 sont disposées d'un même côté du support d'informations SMA et présentent au voisinage de celui-ci l'entrefer G dont la grande dimension est ici montrée perpendiculaire au sens de défilement des informations Fa. Les deux pièces polaires qui constituent le circuit magnétique CIRCMA, sont formées d'une pluralité de couches minces séparées les unes des autres par des couches minces isolantes, ces différentes couches n'étant pas représentées à la figure 1a et à la figure 1b pour simplifier. La pièce PPA1 est disposée sur un substrat amagnétique isolant SUBSAT (seulement représenté à la figure 1b et non représenté à la figure 1a pour rendre celle ci plus claire). Le bobinage BOBA est formé d'une succession de couches minces conductrices et isolantes superposées et enserrées par les deux pièces polaires PPA1 et PPA2.

La pièce polaire PPA1 a, de préférence, une épaisseur (dimension mesurée selon une direction parallèle au sens de défilement Fa) e1, très inférieure à l'épaisseur e2 de la pièce PPA2.

Les pièces polaires PPA1 et PPA2 sont, très fréquemment, réalisées en matériau magnétique anisotrope. L'axe de facile aimantation des pièce polaires est l'axe AFAT parallèle au support d'enregistrement SMA (et perpendiculaire au sens de défilement Fa des informations). L'axe de difficile aimantation est l'axe ADAT normal au plan du support magnétique d'enregistrement SMA.

Le support d'enregistrement SMA qui est disposé en regard de l'entrefer du transducteur TAM1 est constitué d'une couche CMA1 de matériau magnétique anisotrope disposée sur un substrat SUBSA. L'axe de facile aimantation de ce matériau magnétique et anisotrope est désigné par AFAM1. Il est orienté perpendiculairement à la surface de la couche (voir figures 1a et 1b).

Pour écrire les informations d'une piste TRAj du support SMA, qui défile dans le sens de la flèche Fa à une vitesse donnée et constante, on envoie dans le bobinage BOBA un courant représentatif des informations à écrire, formé d'une suite d'impulsions positives et négatives de durée variable. On montre que le champ magnétique appliqué aux pièces polaires par le passage de ce courant dans le bobinage a une composante importante selon la direction de difficile aimantation de celles-ci. On peut donc dire que le bobinage BOBA constitue en ensemble de moyens pour engendrer un champ magnétique selon la direction de difficile aimantation des pièces polaires et en particulier de la pièce polaire aval.

Ce champ magnétique provoque la génération à tranvers des pièces polaires $PPA_1$ et $PPA_2$ d'un flux magnétique qui se ferme à travers la couche magnétique CMA1 et le substrat SUBSA de la manière indiquée à la figure 1b par les lignes de flux magnétique LCM. En regard de la pièce polaire PPA2 la champ magnétique a une intensité beaucoup plus faible qu'en regard de la pièce polaire PPA1, puisque le flux magnétique qui circule dans l'ensemble constitué par les deux pièces polaires PPA1 et PPA2, la couche magnétique CMA1 et le substrat SUBSA, est supposé conservatif et que l'épaisseur e2 est plus grande que l'épaisseur e1.

On voit donc que la pièce polaire aval PPA1 écrit les informations sur le support d'enregistrement magnétique SMA, sans que l'écriture de celles-ci soit perturbée par la pièce polaire amont PPA2. Cette pièce polaire aval est ainsi appelée pièce polaire d'écriture.

On considère la figure 2 qui représente une variante TMA2 du transducteur magnétique TMA1, plus particulièrement destinée à l'écriture d'informations à très haute densité aussi bien radiale que linéique, sur un support d'enregistrement SMA tel qu'un disque magnétique.

Ce transducteur TMA2 comprend:
— une pièce polaire amont PPA3, qu'on appelle également "pôle épais",
— une pièce polaire aval PPA4, qu'on appelle également "pôle mince" ou pièce polaire d'écriture,
— un bobinage BOBA1, formé de préférence, d'une nombre réduit de conducteurs voire même d'un seul conducteur comme il est indiqué à la figure 2. Ce dernier est disposé de telle sorte que, entre les deux pôles PPA3 et PPA4 il soit perpendiculaire à l'axe de difficile aimantation ADAT1 du transducteur, l'axe de facile aimantation de ce transducteur TMA2 étant désigné par AFAT1. Le bobinage $BOBA_1$ constitue un ensemble de moyens pour engendrer un champ magnétique selon la direction de difficile aimantation de la pièce polaire aval.

On voit que la pièce polaire mince PPA4 a une forme éffilée et présente un rétrécissement au niveau de l'entrefer qui a une section dont les dimensions sont de l'ordre du micron, ce qui lui permet d'écrire des informations avec les densités radiale et linéique recherchées. Le transducteur de la figure 2 s'inspire des caractéristiques utilisées dans le brevet No. - 2.297.475 précité.

Ainsi qu'il a été indiqué plus haut, pour accroître les débits d'écriture des informations dans les mémoires à disques, telles que les mémoires magnéto-optiques, on est conduit à réaliser des têtes multi-transducteurs comprenant une pluralité de transducteurs du type de celui montré à la figure 2. Une telle tête selon l'art antérieur est montrée en vue partielle à la figure 3. On désigne cette tête par MTHA. A la figure 3, on n'a représenté que deux transducteurs TMA3 et TMA4, mais il est évident que cette tête MTHA peut contenir davantage de transducteurs. A la figure 3 les deux transducteurs TMA3 et TMA4 sont représentés avec leurs pôles minces ou pièces polaires d'écriture PPA5 et PPA6, les pôles épais n'étant pas représentés pour simplifier la figure.

La tête multi-transducteurs MTHA peut, de préférence, être réalisée de la manière décrite dans le document IEEE TRANSMAG précité. Elle comprend alors un premier bobinage formé du conducteur mince CMCA qui est commun aux deux transducteurs TMA3 et TMA4. Le transducteur TMA3 comprend un second conducteur mince en forme de boucle CMB3, alors que le transducteur TMA4 comprend un conducteur mince en forme de boucle CMB4 de forme identique à CMB3. En particulier, ces deux conducteurs, entre les pôles épais et les pôles minces sont parallèles au conducteur mince commun CMCA, ainsi qu'on peut le remarquer à cette même figure 3.

Le fonctionnement de la tête multi-transducteurs MTHA est le suivant. Un courant constant I1 parcourt le conducteur commun CMACA. Lorsque l'on veut écrire des informations sur la piste TRAj, au moyen, par exemple du transducteur TMA3 on envoie dans le conducteur mince en forme de boucle CMB3 un courant I2 de même sens que I1, ce qui crée au voisinage de l'entrefer G3 du transducteur un champ H3 suffisant pour écrire une information sur la piste TRAj. De même si l'on veut écrire une information sur la piste TRAj+k où k est un entier, on envoie dans le conducteur mince en forme de boucle CMB4 un courant I2 de même sens que I1, ce qui crée un champ H4 au niveau de l'entrefer G4 du transducteur TMA4, d'intensité suffisante pour écrire une information sur la piste TRAj+k. Il est clair que lorsque le courant I2 qui circule dans les conducteurs CMB3 et CMB4 est nul, l'intensité des champs H3 et H4 créée par le passage du courant I1 dans le conducteur commun CMCA a une intensité insuffisante pour écrire une information soit sur la piste TRAj, soit sur la piste TRAj+k.

On voit donc, pour le transducteur TMA$_3$, le conducteur CMCA et le conducteur CMB$_3$ forment "des moyens pour engendrer un champ magnétique selon la direction de difficile aimantation de la pièce polaire aval PPA$_5$". Pour le transducteur TMA$_4$ ces moyens sont constitués par le conducteur CMCA et le conducteur CMB$_4$.

En conclusion, on peut également définir, ceux-ci, aussi bien pour les transducteurs TMA$_1$, TMA$_2$, TMA$_3$, TMA$_4$, comme des moyens de commande de l'écriture agissant sur la pièce polaire d'écriture (pièce polaire aval) de telle sorte qu'elle produise au voisinage immédiat du support, un champ magnétique d'intensité suffisante pour écrire les informations sur ce dernier.

Ainsi qu'il a été dit plus haut, l'un des inconvénients majeur de ces têtes multi-transducteurs est, du fait essentiellement de la présence des conducteurs en forme de boucle CMB3 et CMB4, l'encombrement relativement important des transducteurs TMA3 et TMA4, qui ne permet pas d'écrire simultanément sur deux pistes visines. De la sorte, on voit que la piste TRAj+k, peut être éloignée de la piste TRAj, d'une distance égale à plusieurs pistes. On a donc k>1.

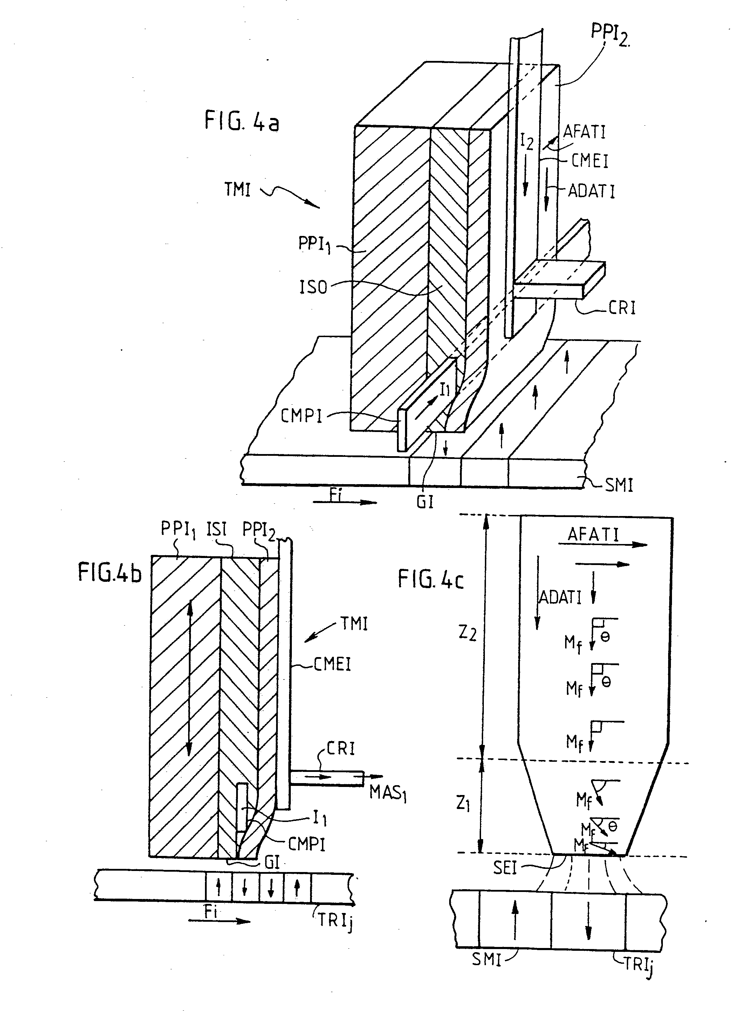

La structure et le fonctionnement de transducteur représenté aux figures 4a et 4b, sont tels qu'ils permettent la constitution de têtes multi-transducteurs remédiant aux inconvénients énoncés ci-dessus. De plus ce transducteur a un fonctionnement extrêmement simple et efficace.

Ainsi qu'on peut le voir aux figures 4a, 4b et 4c, le transducteur TMI comprend:
—un pôle épais PPI1;
—un pôle PPI$_2$ constituant la pièce polaire aval ou pièce polaire aval d'écriture,
—un conducteur mince principal CMPI disposé entre les pôles PPI1 et PPI2 en étant noyé dans un isolant électrique ISI,
—un second conducteur qui est de commande de l'écriture CMEI disposé sur le pôle mince PPI2 de telle sorte que ce dernier se trouve situé entre les deux conducteurs CMPI et CMEI. Il est clair qu'une couche isolante électrique sépare le conducteur CMEI du pôle mince PPI2, cette couche n'étant pas représentée pour simplifier les figures 4a et 4b. Le conducteur CMEI est asocié à une conducteur de retour CRI permettant le retour du courant vers une masse MAS$_1$. Le pôle mince PPI$_2$ est réalisé en matériau magnétique anisotrope. De préférence, le pôle épais PPI$_1$ l'est également.

Le conducteur mince principal CMPI est perpendiculaire à l'axe de difficile aimantation ADATI des pièces polaires PPI1 et PPI2, alors que le conducteur CMEI est perpendiculaire à leur axe de facile aimantation AFATI. En conséquence, le champ magnétique créé par le passage d'un courant I1 dans le conducteur CMPI sera parallèle à l'axe de difficile aimantation ADATI, alors que le champ magnétique créé par le passage d'un courant I2 dans le conducteur CMEI crée un champ magnétique parallèle à l'axe de facile aimantation AFATI.

On peut donc dire que le transducteur TMI comprend:
—des premiers moyens pour engendrer un champ magnétique selon la direction de difficile aimantation de la pièce polaire aval, à savoir le conducteur mince principal CMPI,
—des seconds moyens pour engendrer un champ magnétique selon la direction de facile aimantation de la pièce polaire aval, à savoir le second conducteur CMEI.

Aux figures 4a, 4b et 4c le transducteur TMI est représenté disposé au-dessus d'une piste TRIj d'un support d'enregistrement magnétique SMI d'axe de facile aimantation AFAMI identique au support SMA et qui par exemple est un disque magnétique. Celui-ci défile dans le sens de la flèche F$_i$.

On considère la figure 4c qui illustre le fonctionnement du transducteur TMI.

Au repos, (courant I$_1$ et I$_2$ nuls) c'est-à-dire sans champ magnétique extérieur appliqué, l'aimantation (définie comme la densité des moments magnétiques par unité de volume $\partial m/\partial \omega$ s'oriente spontanément selon la direction de facile aimantation AFATI (vecteur aimantation MR à la figure 4c) ($m$ étant le moment magnétique en chaque point de la pièce polaire aval). Si en jouant sur l'intensité des courants $I_1$ ET $I_2$, on applique au milieu magnétique anisotrope de la pièce polaire aval $PPI_2$, un champ magnétique extérieur ayant une composante selon la direction de difficile aimantation non nulle, l'aimantation (vecteur $M_f$ à la figure 4c) s'oriente selon une direction faisant un angle $\theta$ avec l'axe facile AFATI.

En tout point de la pièce polaire aval, la valeur de est donnée par le système d'équations:

$$\partial\varepsilon/\partial\theta = 0 \quad \text{(condition de minimum d'énergie)}$$
$$\partial^2\varepsilon/\partial\theta^2 \geq 0 \quad \text{(condition de stabilité de l'équilibre)},$$
$$\varepsilon \text{ étant l'énergie en ce point.}$$

Pour écrire une information sur le support SMI avec la pièce polaire aval $PPI_2$, on cherche donc à produire un champ extérieur d'intensité suffisante pour orienter l'aimantation $M_f$ selon une direction la plus proche possible de l'axe de difficile aimantation, avec un $\theta$ moyen voisin de 90° (même si à proximité des bords de la pièce polaire et en particulier, de la surface d'entrefer SEI, $\theta$ est peu différent de zéro en raison de l'existence de champs démagnétisants sur les bords). On observe deux zones, une zone $Z_2$ où $\theta$ est quasiment égal à 90° sauf au voisinage des bords) et une zone $Z_1$ où $\theta$ est différent de 90°.

Ceci est obtenu pour $I_1 \neq 0$ et $I_2$ le plus possible voisin de zéro, l'intensité du courant $I_1$ étant bien entendu choisi pour que le $\theta$ moyen soit le plus voisin possible de 90° et que l'intensité de la composante du champ magnétique créé par la pièce polaire d'écriture au voisinage du support, qui est normale à ce dernier et parallèle à l'axe de facile aimantation AFAMI soit suffisante pour écrire l'information sur le support.

Si on agit sur l'intensité du courant $I_2$ de telle sorte que le champ magnétique appliqué à la pièce polaire ait une composante non nulle selon la direction de facile aimantation AFATI, alors $\theta$ diminue (en tout point de la pièce polaire): on dit alors que l'amination $M_f$ se rapproche de l'axe facile. Dans ces conditions, le champ d'écriture (champ créé par la pièce polaire aval au voisinage immédiat de l'entrefer) diminue jusqu'à devenir insuffisant pour écrire une information sur le support, pour une valeur déterminée de $I_2$.

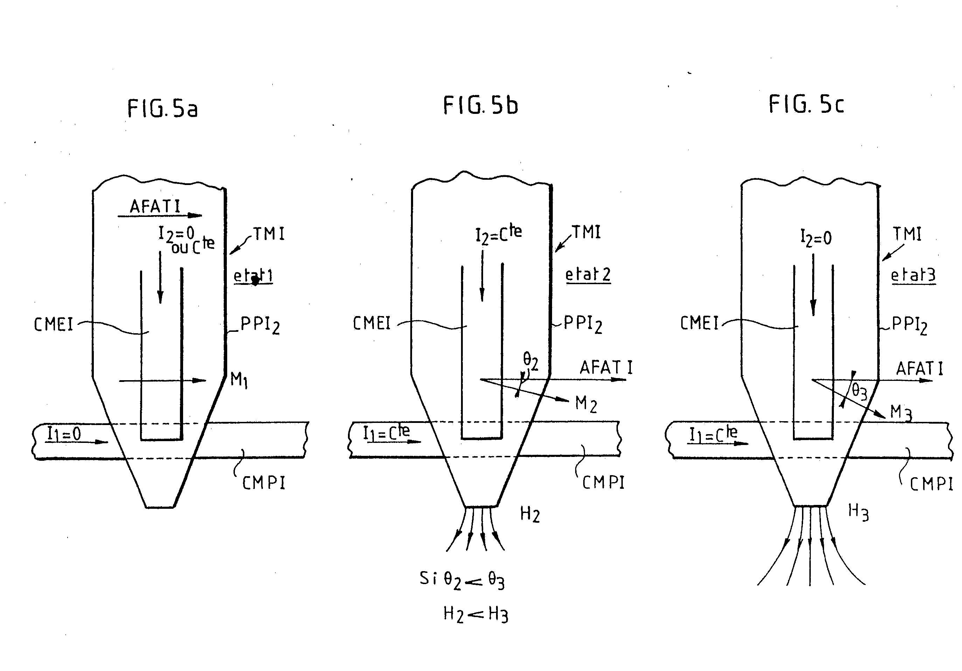

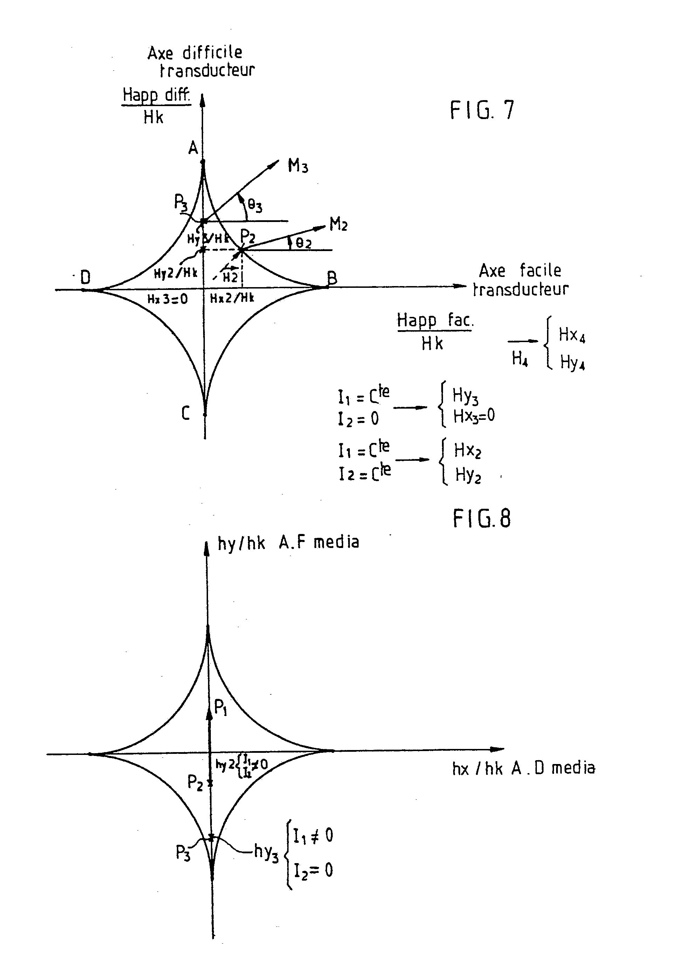

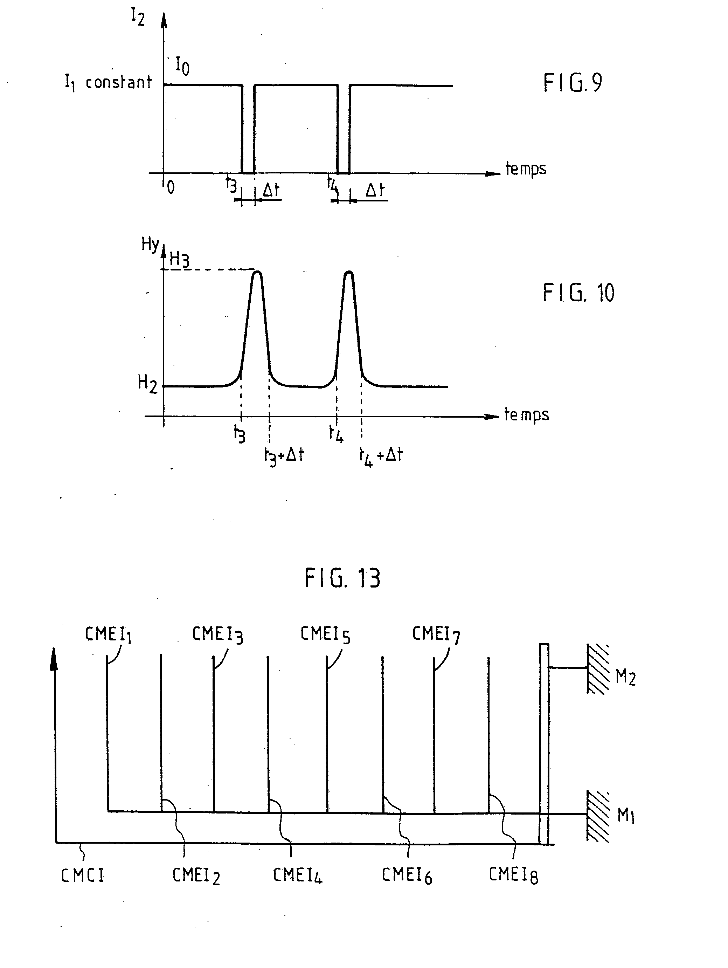

Selon le mode décrite ci-dessus, le transducteur TMI a trois états de fonctionnement illustrés par les figures 5a à 5c.

Sur ces mêmes figures 5a à 5c, on a symbolisé le transducteur TMI par le pôle mince PPI2, le conducteur CMEI et le conducteur CMPI.

Ces trois états de fonctionnement sont les suivants:

1. Etat E1 (figure 5a):

Le courant I1 est nul et le courant I2 est soit nul soit à une valeur quelconque. Dans ces conditions, l'aimantation à l'intérieur du pôle mince PPI2, représentée par le vecteur M1 a une direction parallèle à l'axe de facile aimantation AFATI (il est évident que si $I_2$ a une valeur quelconque il crée un champ magnétique parallèle à l'axe de facile aimantation qui renforce l'orientation de l'aimantation à l'intérieur du pôle mince parallèlement à l'axe de facile aimantation AFATI);

2. Etat E2 (figure 5b):

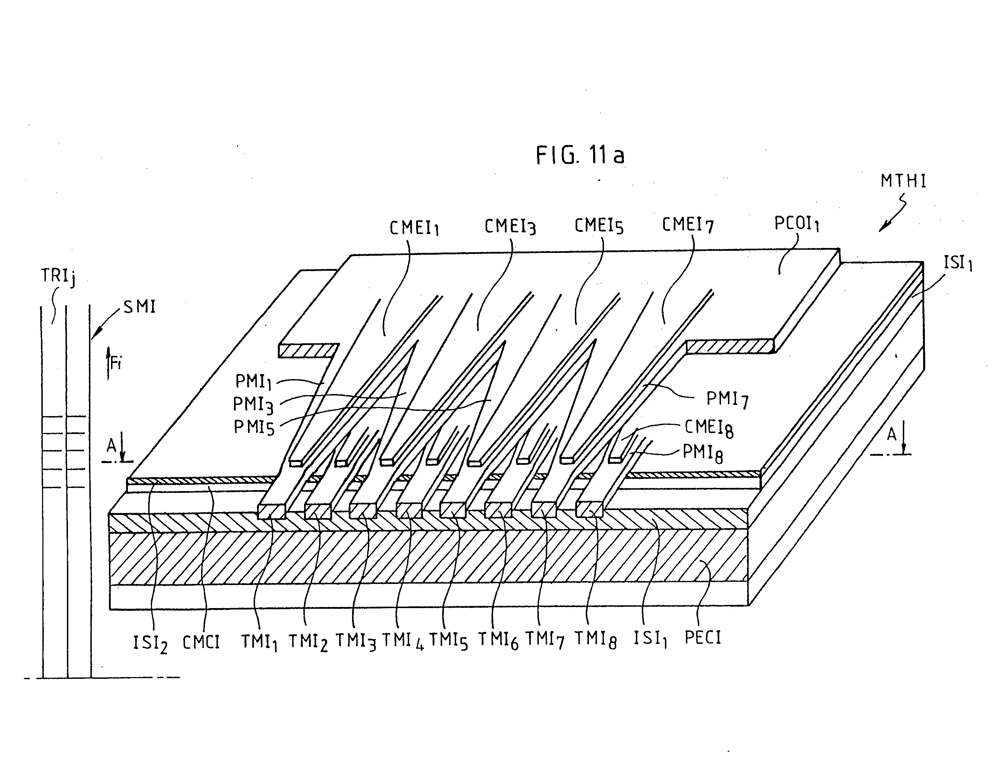

On envoie dans le conducteur CMPI un courant I1 constant et on envoie dans le conducteur CMEI un courant I2 constant. Dans le pôle mince PPI2 l'aimantation prend la direction du vecteur M2. Ce dernier fait un angle $\theta 2$ avec la direction de facile aimantation AFATI. Cet angle $\theta 2$ est déterminé de la manière indiquée à la figure 7, qui représente une courbe caractéristique du matériau magnétique anisotrope constituant le pôle PPI2, courbe dénommée "astroïde". Rappelons que cette courbe est obtenue de la manière suivante: On porte en ordonnée la valeur du rapport entre le champ magnétique appliqué selon la direction de l'axe difficile et le champ d'anisotropie Hk du matériau (on rappelle que le champ d'anisotropie Hk est la valeur du champ magnétique appliquée H dans la direction de difficile aimantation pour laquelle le matériau est saturé dans cette direction). On porte en abscisse la valeur du rapport entre le champ magnétique appliqué dans la direction de l'axe facile du matériau et le même champ d'anisotropie Hk. On appelle, A, B, C, D les sommets de l'astroïde, A et C étant des sommets placés sur l'axe des ordonnées et B et D étant les sommets placés sur l'axe des abscisses. Si l'on appelle Hx2 le champ magnétique créé par le passage du courant I2 selon la direction de l'axe facile de Hy2 le champ magnétique créé par le passage du courant I1 dans le conducteur CMPI, selon la direction de l'axe difficile, on obtient un point de fonctionnement P2 ayant pour abscisse le rapport Hx2/Hk et en ordonnée le rapport Hy2/Hk. La tangente à l'astroïde menée depuis le point $P_2$ donne la direction du vecteur aimantation M2 par rapport à l'axe de facile aimantation, direction définie par l'angle $\theta 2$. De plus amples détails sur l'astroïde et la manière dont on obtient l'angle $\theta$ sont fournis dans le livre de Landau et Lifschitz, éditions de Moscou, intitulé "Electrodynamique des milieux continus" paragraphe 37, pages 199 et suivantes.

Au vecteur de magnétisation M2, correspond un champ magnétique H2 au voisinage du pôle mince PPI2 du transducteur CMI.

3. Etat E3 (figure 5c):

On envoie dans le conducteur CMPI un courant I1 de préférence constant, le courant I2 dans le conducteur CMEI étant nul. L'aimantation dans le pôle mince PPI2 est donnée par le vecteur aimantation M3 qui fait un angle $\theta 3$ avec la direction de facile aimantation AFATI, cet angle $\theta 3$ étant obtenu de la manière indiquée à la figure 7: le point de fonctionnement P3 du transducteur est défini par son abscisse égale à 0 et par son ordonnée égale Hy3/Hk. La direction du vecteur aimantation M3 est donnée par la droite tangente à l'astroïde qui fait donc un angle θ3 avec la parallèle à l'axe facile menée par le point P3. On voit clairement d'après les figures 7, 5b et 5c que l'angle θ3 est supérieur à l'angle θ. Dans ces conditions, on montre que le champ magnétique H3 créé par le conducteur TMI au voisinage immédiat du pôle mince PPI2 est supérieur au champ H2.

Aux différents états définis par les figures 5a, 5b et 5c correspondent respectivement trois étapes dans le processus d'écriture des informations sur le support magnétique d'enregistrement SMI, ces trois étapes étant désignées respectivement par PH1, PH2, PH3.

Ces trois étapes peuvent être défini de la manière suivante:

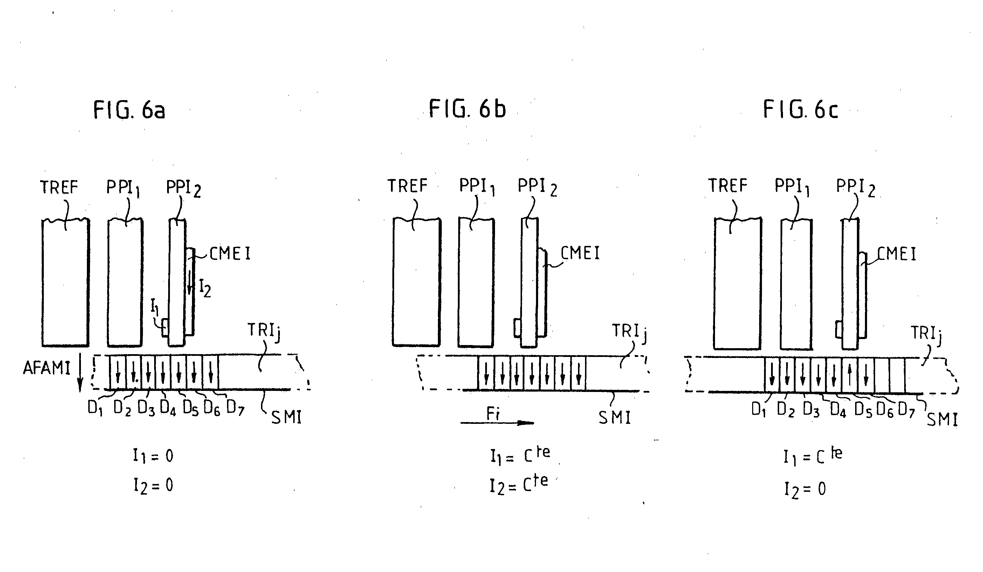

a) Etape PH1 (figure 6a):

On suppose que le support magnétique d'enregistrement SMI est dans une état magnétique tel que son aimantation soit uniforme et définit par exemple par le sens des flèches contenues dans les différents domaines D1 à D7 à la figure 6a. Cette aimantation uniforme est obtenue par exemple au moyen d'un transducteur d'effacement TREF de type connu disposé en amont de la pièce polaire amont $PPI_1$. Il va de soi que cette aimantation est parallèle à l'axe de facile aimantation AFAMI du support d'enregistrement SMI. Si, par convention, on suppose que les aimantations positives sont celles orientées de haut en bas sur les figures 6a à 6c, on voit que à la figure 6a, l'aimantation est positive dans les domaines D1 à D7.

Il va des soi que si les courants I1 et I2 sont nuls, l'état magnétique du pôle mince PPI2 du transducteur TMI étant défini par la figure 5a, le support d'enregistrement SMI ne subit en aucun point un changement de sens de magnétisation et qu'aucune information n'est écrite sur le support SMI.

b) Etape PH2 (figure 6b) ($I_1$ et $I_2 \neq 0$):

L'état magnétique du pôle mince PPI2 est défini par la figure 5b, le champ magnétique au voisinage immédiat de ce pôle étant H2. L'intensité de ce champ n'est pas suffisante pour provoquer un quelconque changement de sens de magnétisation sur le support SMI. Par conséquent, dans l'étape PH2 on n'écrit aucune information sur la piste TRIj du support d'enregistrement SMI.

c) Etape PH3 (figure 6c):

Cette étape correspond à l'état magnétique E3 défini par la figure 5c (I1=≠0, I2=0). L'intensité H3 du champ magnétique créé par le transducteur TMI au voisinage immédiat de la pièce polaire PPI2 est suffisante pour provoquer un changement de sens de magnétisation dans le domaine magnétique, ici D6, qui se situe en regard du pôle mince PPI2 à l'instant où le courant I2 devient nul, c'est-à-dire à l'instant t3 (voir figure 9). Pour faire basculer l'aimantation dans le domaine D6, il suffit que la durée pendant laquelle le courant I2 est nul soit extrêmement faible, désignée par Δt à la figure 9. Si $I_2$ est nul, on dit également que les seconds moyens (conducteur CMEI) sont au repos.

A chacune des étapes du processus d'écriture défini par les figures 6a, 6b et 6c, correspondent des états magnétiques du support d'enregistrement SMI définis à la figure 8 où l'on a représenté l'astroïde du support d'enregistrement SMI. Cette astroïde donne la courbe de variation de hy/hk en fonction de hx/hk. hy est la valeur du champ magnétique dans le support d'enregistrement selon la direction de l'axe facile AFAMI, hx est la valeur du champ magnétique dans le support SMI selon l'axe difficile perpendiculaire à l'axe facile AFAMI et parallèle à la surface du support, hk étant le champ d'anisotropie du milieu magnétique anisotrope constituant le support d'enregistrement SMI.

A l'étape PH1 correspond le point de fonctionement P1.

A l'étape PH2 correspond le point de fonctionnement P2, la valeur du champ magnétique appliquée selon l'axe facile, en raison de la présence du champ H2 au voisinage du pôle PPI2, n'étant pas suffisante pour faire basculer les aimantations dand le support SMI.

A l'étape PH3 correspond le point de fonctionnement P3, où la valeur du champ magnétique appliquée à l'intérieur du support hy3 en fonction du champ magnétique H3 produit par le transducteur TMI au voisinage immédiat du pôle PPI2 est suffisante pour faire basculer l'aimantation dans le domaine D6, par exemple.

Si l'on se reporte à la figure 9, on voit que le courant I2 a l'allure indiquée à cette figure, c'est-à-dire qu'il est constant et égal à I0, par exemple positif entre les instants 0 et t3, nul entre les instants t3 et t3+Δt, à nouveau constant et positif entre les instants t3+Δt et t4, de nouveau nul entre les instants t4 et t4+Δt (où l'on fait basculer l'aimantation dans un autre domaine (non représenté à la figure 6c) et ainsi de suite.

A la figure 9, correspond la figure 10 qui représente la variation du champ Hy produit par le pôle PPI2 du transducteur TMI au voisinage immédiat de celui ci. On voit que ce champ varie entre une valeur H2 entre les instants 0 et t3 et H3 entre les instants t3 et t3+Δt. Le champ Hy est de nouveau égal à H2 entre les instants t3+Δt et t4, de nouveau égale H3 entre les instants t4 et t4+Δt.

En conclusion, on voit que écrire une information sur le support SMI, il suffit de supprimer le courant qui circule dans le conducteur CMEI. On peut donc dire que les deux conducteurs CMPI et CMEI sont des conducteurs à action contraire puisque le passage du courant dans CMEI bloque l'écriture alors que sa suppression la permet.

On peut également dire que:

—le conducteur mince principal CMPI constitue des premiers moyens de commande de l'écriture agissant sur la pièce polaire d'écriture $PPI_2$ de telle sorte qu'elle produise au voisinage immédiat du support un champ magnétique d'intensité suffisante pour écrire les informations sur ce dernier,

—le conducteur CMEI constitue des seconds moyens de commande agissant sur la pièce polaire d'écriture PPI$_2$ en cas de non-écriture par amoindrissement de l'action des premiers moyens (conducteur CMPI), de manière à ce que le champ magnétique produit par la pièce polaire d'écriture ait une intensité insuffisante pour écrire des informations sur le support.

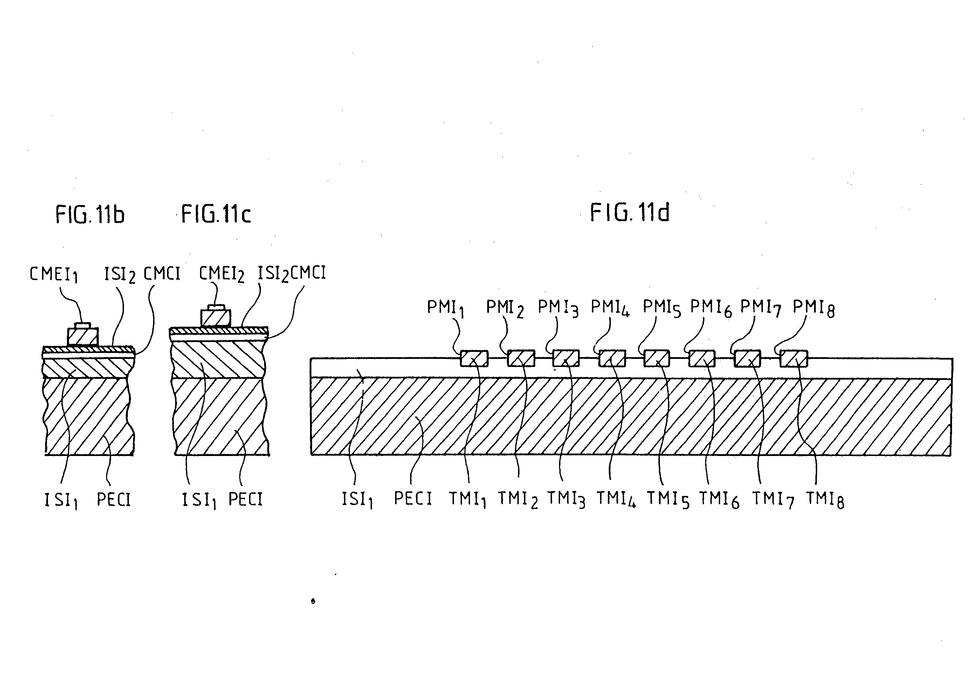

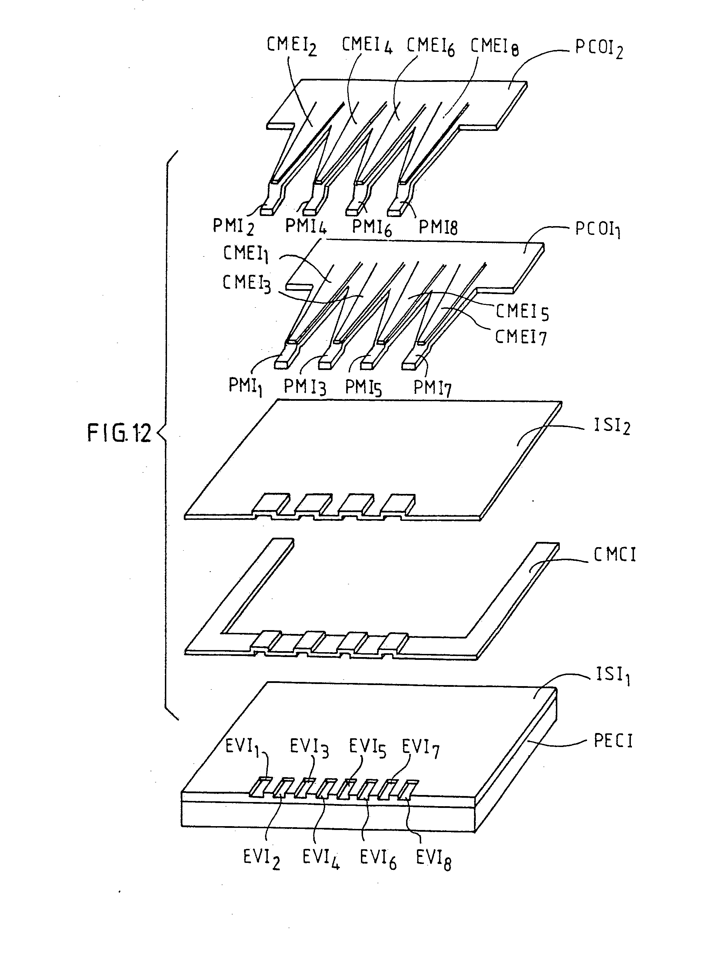

On considère désormais les figures 11 et 12 qui montrent une tête multi-transducteur selon l'invention MTHI constituée d'une pluralité de transducteurs (à savoir 8 dans l'exemple de réalisation montré sur ces figures) à savoir les transducteurs TMI1 à TMI8 dont la structure et les principes de fonctionnement sont strictement analogues à ceux du transducteur TMI montré 4a et 4b.

L'ensemble de ces transducteurs a un pôle épais commun PECI.

Les pôles minces des transducteurs TMI1 à TMI8 sont respectivement désignés par PMI1 à PMI8.

Ces pôles minces sont séparés du pôle épais commun PECI par une première couche isolante ISI1.

A la figure 11a n'ont été représentés, pour simplifier la figure, que les pôles minces d'ordre impair à savoir PMI1, PMI3, PMI5, PMI7, Les pôles minces d'ordre pair, à savoir, PMI2, PMI4, PMI6, PMI8 ne sont représentés que partiellement par leurs extrémités voisines de l'entrefer.

La tête MTHI comprend un conducteur commun CMCI à l'ensemble des tranducteurs TMI1 à TMI8, ce conducteur commun jouant le rôle du conducteur CMPI du transducteur TMI selon l'invention représenté aux figures 4a et 4b.

Entre ce conducteur commun CMCI et les pôles minces PMI1 à PMI8, est disposée une seconde couche isolante ISI2.

Chacun des transducteurs TMI1 à TMI8 comprend un conducteur mince d'écriture. Ces conducteurs sont désignés respectivement par CMEI1 à CMEI8. Ces conducteurs sont disposés sur leurs pôles minces respectifs PMI1 à PMI8 de telle façon ces derniers se trouvent situés entre eux et le conducteur commun CMCI.

On voit, par exemple sur la figure 11a et sur la figure 12 que les pôles minces d'ordre impaire PMI1 à PMI7, présentent, au niveau du conducteur commun CMCI des épaulements moins importants que les conducteurs d'ordre pair, en raison de la forme du conducteur commun CMCI, plus particulièrement mis en évidence à la figure 12. On peut également se rendre compte de ce fait aux figures 11b et 11c qui représentent une vue en coupe prise suivant A des transducteurs TMI1 et TMI2.

Pour des raisons de réalisation ratique des pôles pairs et impairs dues aux dimensions et à la forme respectives que ceux-ci doivent avoir (telles que montrées par exempleaux figures 4a, 4b, 11a et 12) il est plus aisé de réaliser l'ensemble des pôles d'ordre impair et l'ensemble des pôles d'ordre pair sous la forme de deux ensembles distincts physiquement dont l'un est disposé dans sa plus grande partie au-dessus de l'autre.

On voit que l'ensemble des pôles minces d'ordre impair, ainsi que l'ensemble des pôles minces d'ordre pair, sont respectivement issus d'une même partie commune, à savoir PCOI1 pour les pôles d'ordre impair et PCOI2 pour les pôles d'ordre pair.

L'ensemble des pôles pairs est situé au-dessus de l'ensemble des pôles impairs (comparer les figures 11c et 11b en regardant les positions respectives de PMI$_2$ et PMI$_1$) à l'exception des extrémités des pôles qui sont les plus proches du support SMI, au niveau de l'entrefer. Ces extrémités de tous les pôles, pairs ou impairs, voisins du plan de l'entrefer sont coplanaires et équidistantes entre elles, le pas des pôles étant égal à celui des pistes du support.

On voit, en considérant plus particulièrement la figure 12 que la couche isolante ISI1 comprend des évidements EVI1 à EVI8 destinés à recevoir les extrémités des pôles minces PMI1 à PMI8.

On considère la figure 13.

Le schéma électrique simplifié de commande des différents transducteurs TMI1 à TMI8 de la plate-forme MTHI est extrêmement simple: le conducteur commun CMCI est connecté à une masse M1, alors que l'ensemble des huit conducteurs de commande d'écriture CMEI1 à CMEI8 est connecté à la même masse M2.

Le fonctionnement de ce circuit est le suivant: si l'on veut écrire une information donnée sur le support SMI qui défile dans le sens de la flèchje Fi devant la tête TMHI (voir figure 11a) au moyen d'un ou plusieurs transducteurs de cette tête, par exemple, les transducteurs CMEI2 et CMEI5, on annule le courant dans les conducteurs CMEI2 et CMEI5, de la manière indiquée à la figure 9. Il reste entendu que dans les autres conducteurs, à savoir CMEI1, CMEI3, CMEI4, CMEI6 à CMEI8, le courant reste constant et égal par exemple à la valeur positive I0 (voir également figure 9).

Ainsi la tête multi-transducteurs selon l'invention permet d'écrire simultanément huit informations sur huit pistes voisines du support d'enregistrement SMI, sans qu'il y ait interférence entre les différents transducteurs. En d'autres termes, le problème de la diaphonie entre les différents transducteurs est éliminé grâce à l'invention. Ceci résulte notamment du fait que les champs magnétiques créés par les transducteurs voisins, des uns des autres, sont de même signe, ce que signifie que les lignes de champ magnétique d'un transducteur ne peuvent avoir tendance à être déviées vers les lignes de champ magnétique des transducteurs voisins.

**Revendications**

1. Tête hautement intégrée d'écriture d'informations sur un support (SMI) magnétique défilant devant elle, comportant:

—une pluralité de transducteurs (TMI₁ à TMI₈) dont chacun comprend une première pièce polaire (PECI) et une seconde pièce polaire en couches minces disposées d'un même côté du support (SMI), la seconde pièce polaire étant magnétiquement anisotrope avec ses directions de difficile (ADATI) et facile aimantation (AFATI) respectivement normales et parallèles au support,

—des premiers moyens de commande (CMCI) communs à tous les transducteurs pour engendrer un champ magnétique selon la direction de difficile aimantation de la pièce polaire aval,

—des seconds moyens de commande (CMEI₁, CMEI₂, ..., CMEI₈) propres à chaque seconde pièce polaire pour engendrer un champ magnétique selon la direction de facile aimantation de la pièce polaire aval, caractérisé en ce que, les premiers et les seconds moyens de commande étant disposés perpendiculairement l'une à l'autre de part et d'autre de la seconde pièce polaire, elle comprend un premier ensemble de secondes pièces polaires (PMI₁ à PMI₇) et un second ensemble de secondes pièces polaires (PMI₂ à PMI₈) distincts dont l'un est disposé dans sa plus grande partie au-dessus et parallèlement à l'autre, à l'exception des extrémités de chacune des secondes pièces polaires les plus proches du support d'enregistrement (SMI) lesquelles sont coplanaires et équidistantes entre elles, leur pas étant égal à celui des pistes du support.

2. Tête selon la revendication 1 caractérisé en ce que le conducteur commun (CMCI) présente une pluralité d'épaulements en nombre égal au nombre de pôles du second ensemble, les secondes pièces polaires du second ensemble présentant au niveau du conducteur commun (CMCI) des épaulements plus importants que les secondes pièces polaires du premier ensemble, en raison de la présence des épaulements du conducteur commun.

3. Tête selon l'une quelconque des revendications 1, 2 caractérisé en ce que les seconds moyens de commande (CMEI₁ à CMEI₈) sont disposés sur chacune des secondes pièces polaires (PMI₁ à PMI₈).

4. Procédé de fabrication de la tête multi-transducteurs selon la revendication 1 ou 2 ou 3, caractérisé en ce que il comprend les différentes étapes suivantes:

—on réalise une première pièce polaire commune (PECI),

—on dépose sur cette première pièce polaire un premier isolant (ISI₁),

—on pratique une pluralité d'évidements (EVI₁ à EVI₈) à l'intérieur de cet isolant (ISI₁) de manière à y placer ultérieurement les extrémités des pôles des secondes pièces polaires (PMI₁ à PMI₈),

—on dépose le conducteur commun (CMCI) ayant un nombre d'épaulements égal au nombre des secondes pièces polaires du second ensemble de pièces polaires,

—on dépose sur le conducteur commun un isolant (ISI₂) présentant le même nombre

d'épaulements que le conducteur commun, les épaulements de l'isolant venant recouvrir les épaulements du conducteur commun (CMCI),

—on dépose le premier ensemble de secondes pièces polaires (PCOI₁),

—on dépose sur chacune des secondes pièces polaires du premier ensemble, chacun des seconds moyens de commande (CMEI₁ à CMEI₇), associé à chacune des secondes pièces polaires correspondante,

—on dépose le second ensemble de secondes pièces polaires (PCOI₂)

—on dépose sur chacune des secondes pièces polaires du second ensemble chacun des seconds moyens de commande (CMEI₂ à CMEI₈), associé à chacune des secondes pièces polaires correspondantes.

**Patentansprüche**

1. Hochintegrierter Schreibkopf zum Aufzeichnen vom Informationen auf einen magnetischen Träger (SMI), der vor ihm vorbieläuft, enthaltend:

—mehrere Wandler (TMI₁ bis TMI₈, wovon jeder ein erstes Polstück (PECI) und ein zweites Polstück aus Dünnschichten aufweist, die auf derselben Seite des Trägers (SMI) angeordnet sind, wobei das zweite Polstück magnetisch anisotrop ist und mit seiner Richtung schwieriger Magnetisierung (ADATI) senkrecht und mit seiner Richtung leichter Magnetisierung (AFATI) parallel zum Träger liegt,

erste Steuermittel (CMI), die allen Wandlern gemeinsam sind, um ein Magnetfeld in der Richtung schwerer Magnetisierung des hinteren Polstücks zu erzeugen,

—zweite Steuermittel (CMEI₁, CMEI₂,..., CMEI₈), die jedem zweiten Polstück zugehörig sind, um ein Magnetfeld in der Richtung leichter Magnetisierung des hinteren Polstücks zu erzeugen,

dadurch gekennzeichnet, daß die ersten und die zweiten Steuermittel senkrecht zueinander beiderseits des zweiten Polstücks angeordnet sind und der Schreibkopf eine erste Gruppe von zweiten Polstücken (PMI₁ bis PMI₇) sowie eine zweite Gruppe von zweiten Polstücken (PMI₂ bis PMI₈) aufweist, die verschieden sind und von denen eine mit ihrem größten Teil oberhalb der anderen und parallel zu dieser angeordnet ist, mit Ausnahme der Enden jedes der zweiten Polstücke, die sich am nächsten am Aufzeichnungsträger (SMI) befinden und koplanar sowie untereinander äquidistant sind, mit einem Teilungsshritt, der gleich dem der Spuren des Trägers ist.

2. Kopf nach Anspruch 1, dadurch gekennzeichnet, daß der gemeinsame Leiter (CMCI) mehrere Schultern aufweist, deren Anzahl gleich der Anzahl von Polen der zweiten Gruppe ist, wobei die zweiten Polstücke der zweiten Gruppe auf der Höhe des gemeinsamen Leiters (CMCI) größere Schulter aufweisen als die zweiten Polstücke der ersten Gruppe, im Hinblick auf die Anwesenheit der Schultern des gemeinsamen Leiters.

3. Kopf nach einem der Ansprüche 1 und 2, dadurch gekennzeichnet, daß die zweiten Steuermittel (CMEI₁ bis CMEI₈) auf jedem der zweiten Polstücke (PMI₁ bis PMI₈) angeordnet sind.

4. Verfahren zur Herstellung des Vielfachwandler-Kopfes nach Anspruch 1, 2 oder 3, dadurch gekennzeichnet, daß es folgende verschiedene Schritte enthält:

—es wird ein erstes gemeinsames Polstück (PECI) gebildet,

—auf diesem ersten Polstück wird eine erste Isolierung (ISI₁) aufgebracht,

—mehrere Aussparungen (EVI₁ bis EVI₈) werden im Inneren dieser Isolierung (ISI₁) angebracht, so daß dort später die Polenden der zweiten Polstücke (PMI₁ bis PMI₈) in Stellung gebracht werden,

—der gemeinsame Leiter (CMCI) mit einer Anzahl von Schultern, die gleich der Anzahl von zweiten Polstücken der zweiten Gruppe von Polstücken ist, wird aufgebracht,

—auf dem gemeinsamen Leiter wird eine Isolierung (ISI₂) aufgebracht, welche dieselbe Anzahl von Schultern wie der gemeinsame Leiter aufweist, wobei die Schultern der Isolierung die Schultern des gemeinsamen Leiters (CMCI) bedecken,

—die erste Gruppe von zweiten Polstücken (PCOI₁) wird aufgebracht,

—auf jedem der zweiten Polstücke der ersten Gruppe wird jedes der zweiten Steuermittel (CMEI₁ bis CMEI₇) aufgebracht, jeweils in Zuordnung zu einem entsprechenden zweiten Polstück,

—die zweite Gruppe von Polstücken (PCOI₂) wird aufgebracht,

—auf jedem der zweiten Polstücke der zweiten Gruppe wird jedes der zweiten Steuermittel (CMEI₂ bis CMEI₈) aufgebracht, jeweils in Zuordnung zu einem entsprechenden zweiten Polstück.

**Claims**

1. A highly integrated transducer for recording data on a magnetic carrier (SMI) passing before it, comprising:

—a plurality of transducers (TMI₁ to TMI₈) each of which has a first pole piece (PECI) and a second pole piece in the form of thin layers situated on one and the same side of the carrier (SMI), the second pole piece being magnetically anisotropic with its directions of difficult magnetisation (ADATI) and easy magnetisation (AFATI) being respectively perpendicular and parallel to the carrier,

—first control means (CMI) common to all the transducers, for generating a magnetic field along the direction of difficult magnetisation of the downstream pole piece,

—second control means (CME₁, CMEI₂, ..., CMEI₈) attributed to each second pole piece for generating a magnetic field along the direction of easy magnetisation of the downstream pole piece, characterised in that, the first and second control means being placed perpendicularly one with respect to the other on both sides of the second pole piece, it comprises a first set of second pole pieces (PMI₁ to PMI₇) and a second set of second pole pieces (PMI₂ to PMI₈) separate from the former, of which the one is positioned in its greater part above and parallel to the other, except for the extremities of each of the second pole pieces closest to the record carrier (SMI), which are coplanar and mutually equidistant, their pitch being equal to that of the tracks of the carrier.

2. A transducer according to claim 1, characterised in that the common conductor (CMCI) has a plurality of shoulders equal in number to the number of poles of the second set, the second pole pieces of the second set comprising at the level of the common conductor (CMCI) greater shoulders than the second pole pieces of the first set, because of the presence of the shoulders of the common conductor.

3. A transducer according to any one of the claims 1, 2, characterised in that the second control means (CMEI₁ to CMEI₈) are disposed on each of the second pole pieces (PMI₁ to PMI₈).

4. A method for the production of the multitransducer head according to claims 1 or 2 or 3, characterised in that it comprises the following steps:

—producing a first common pole piece (PECI),

—depositing a first insulation (ISI₁) on this first pole piece,

—forming a plurality of recesses (EVI₁ to EVI₈) within this insulation (ISI₁) so that the extremities of the poles of the second pole pieces (PMI₁ to PMI₈) may subsequently be placed in the same,

—depositing the common conductor (CMCI) having a number of shoulders equal to the number of second pole pieces of the second set of pole pieces,

—depositing on the common conductor an insulator (ISI₂) having the same number of shoulders as the common conductor, the shoulders of the insulator covering the shoulders of the common conductor (CMCI),

—depositing the first set of second pole pieces (PCOI₁),

—depositing on each of the second pole pieces of the first set, each of the second control means (CMEI₁ to CMEI₇) associated with each of the corresponding second pole pieces,

—depositing the second set of second pole pieces (PCOI₂),

—depositing on each of the second pole pieces of the second set, each of the second control means (CMEI₂ to CMEI₈) associated with each of the corresponding second pole pieces.

FIG. 1a

CIRCMA

TMA₁

PPA2

PPA₁

BOBA

AFAT

ADAT

Di  Di+1  Di+2

TRAj

G

Fa

SMA

CMA₁  SUBSA  AFAM₁

FIG. 1b

PPA$_2$      PPA$_1$

TMA$_1$

BOBA

SUBSAT

e2      e1

AFAM$_1$
SUBSA      CMA$_1$
SMA

Fa
LCM

2

FIG. 2

PPA₃  TMA₂  FIG. 2

AFA^T1  PPA₄

ADA^T1

BOBA₁

SMA

FIG. 3

TMA₃  TMA₄  MTHA

CMB₃  CMB₄

$I_2 \neq 0$  $I_2 \neq 0$

PPA₅  PPA₆

$I_1 \neq 0$  $I_1$

CMCA

H₃  G₃  H₄  G₄

TRAⱼ  TRAⱼ₊ₖ

FIG. 4a

FIG.4b

FIG.4c

FIG. 5a

FIG. 5b

FIG. 5c

$I_2 = 0$ ou $C^{te}$ — etat1

$I_2 = C^{te}$ — etat2

$I_2 = 0$ — etat3

Si $\theta_2 < \theta_3$

$H_2 < H_3$

0 132 186

# 0 132 186

FIG. 7

Axe difficile
transducteur

$\dfrac{\text{Happ diff.}}{Hk}$

$\dfrac{\text{Happ fac.}}{Hk} \xrightarrow{H_4} \begin{cases} Hx_4 \\ Hy_4 \end{cases}$

Axe facile
transducteur

$\begin{aligned} I_1 &= C^{te} \\ I_2 &= 0 \end{aligned} \longrightarrow \begin{cases} Hy_3 \\ Hx_3{=}0 \end{cases}$

$\begin{aligned} I_1 &= C^{te} \\ I_2 &= C^{te} \end{aligned} \longrightarrow \begin{cases} Hx_2 \\ Hy_2 \end{cases}$

FIG. 8

hy/hk  A.F media

hx / hk  A.D media

$hy_3 \begin{cases} I_1 \neq 0 \\ I_2 = 0 \end{cases}$

6

FIG. 9

FIG. 10

FIG. 13

FIG. 6a

TREF    PPI₁    PPI₂

CMEI

I₂

I₁

TRIⱼ

AFAMI ↓

D₁ D₂ D₃ D₄ D₅ D₆ D₇    SMI

$I_1 = 0$

$I_2 = 0$

FIG. 6b

TREF    PPI₁    PPI₂

CMEI

TRIⱼ

Fi →    SMI

$I_1 = C^{te}$

$I_2 = C^{te}$

FIG. 6c

TREF    PPI₁    PPI₂

CMEI

TRIⱼ

D₁ D₂ D₃ D₄ D₅ D₆ D₇    SMI

$I_1 = C^{te}$

$I_2 = 0$

0 132 186

FIG. 11 a

FIG.11b    FIG.11c                    FIG.11d

CMEI₁   ISI₂ CMCI   CMEI₂  ISI₂CMCI

PMI₁   PMI₂   PMI₃  PMI₄   PMI₅  PMI₆  PMI₇  PMI₈

ISI₁  PECI        ISI₁  PECI

ISI₁   PECI   TMI₁  TMI₂  TMI₃  TMI₄  TMI₅  TMI₆  TMI₇  TMI₈

FIG.12

CMEI$_2$ CMEI$_4$ CMEI$_6$ CMEI$_8$ PCOI$_2$

PMI$_2$ PMI$_4$ PMI$_6$ PMI8

PCOI$_1$

CMEI$_1$
CMEI$_3$
CMEI$_5$
CMEI$_7$

PMI$_1$ PMI$_3$ PMI$_5$ PMI$_7$

ISI$_2$

CMCI

ISI$_1$

PECI

EVI$_1$ EVI$_3$ EVI$_5$ EVI$_7$

EVI$_2$ EVI$_4$ EVI$_6$ EVI$_8$